# EUROPÄISCHE PATENTANMELDUNG

(11) **EP 2 145 800 A1**
(43) Veröffentlichungstag der Anmeldung: **20.01.2010**
(21) Anmeldenummer: 09006785.1
(22) Anmeldetag: 20.05.2009
(51) Int. Cl.: B60R 21/017

(54) **Verfahren und Vorrichtung zum Steuern eines elktromagnetischen Aktors**

(30) Priorität: 17.07.2008 DE 102008033582
(71) Anmelder: THOMAS MAGNETE GmbH, 57562 Herdorf (DE)
(72) Erfinder: Overkott, Horst Walter, 57586 Weitefeld (DE); Grohn, Ralf, 58540 Meinerzhagen (DE)

(57) **Zusammenfassung**

Die Erfindung betrifft ein Verfahren und eine Vorrichtung zum Diagnostizieren und ggf. Auslösen eines elektromagnetischen Aktors (2) für Kraftfahrzeug-Sicherheitseinrichtungen, wobei der elektromagnetische Aktor (2) über eine pyrotechnische Schnittstelle (3) an ein Diagnose und / oder Schalt-Initialsignale abgebendes und zumindest Diagnosesignale aufnehmendes Kfz-Steuergerät angeschlossen ist, soll so weitergebildet werden, dass der elektromagnetische Aktor (2) an eine pyrotechnische Schnittstelle angeschlossen werden kann, ohne diese Schnittstelle modifizieren zu müssen, wobei sichergestellt sein soll, dass das, der pyrotechnischen Schnittstelle vorgelagerte Steuergerät keinen Unterschied zwischen einem eventuell angeschlossenen pyrotechnischen Aktor oder einem elektromagnetischen Aktor feststellt, dass heißt auch die Diagnose des elektromagnetischen Aktors muss dabei möglich sein. Zur Lösung dieser Aufgabe wird vorgeschlagen, dass aufgrund eines Diagnosesignals des Kfz-Steuergerätes der elektromagnetische Aktor (2) auf seine Funktionsfähigkeit überprüft wird und das Prüfergebnis dem Kfz-Steuergerät als Diagnoseergebnissignal aufgeschaltet wird, wobei das Prüfergebnis in seiner Art dem eines pyrotechnischen Aktors entspricht, und dass aufgrund eines Schalt- Initialsignales der elektromagnetische Aktor (2) ausgelöst wird.

## Beschreibung

Die Erfindung betrifft ein Verfahren zum Diagnostizieren und ggf. Auslösen eines elektromagnetischen Aktors für Kraftfahrzeug-Sicherheitseinrichtungen nach dem Oberbegriff des Anspruches 1 sowie einen elektromagnetischer Aktor zum Auslösen solcher Sicherheitseinrichtungen mit einem Steuergerät entsprechend dem Oberbegriff des Anspruches 3.

Sicherheitssysteme in Kraftfahrzeugen, wie beispielsweise Airbags, werden in zunehmenden Maße von pyrotechnischen Aktoren ausgelöst. Dabei werden Airbags durch heiße Gase, die durch das Abbrennen eines Treibgases entstehen, aufgeblasen. Der Treibsatz wird durch ein pyrotechnisches Element aktiviert, welches wiederum von einem Steuergerät angesteuert wird. Dem Steuergerät sind Sensoren vorgeordnet, die Beschleunigungen, Erschütterungen, Überschläge oder dergleichen erkennen und entsprechende Signale ans Steuergerät geben, in welchem diese analysiert werden. In Abhängigkeit der Analyse werden ggf. die entsprechenden pyrotechnischen Elemente und damit die Sicherheitssysteme aktiviert.

Neben den beispielsweise erwähnten Airbags lassen sich allgemeine Sicherheitsapplikationen wie Gurtstraffer, Kopfstützen-Verriegelung, Überroll-Schutzbügel, Fußgängerschutz, Absperrventile für Kraftstoffleitungen und elektrische Leitungen oder Aktoren zum End- und Verriegeln mechanischer Gelenke durch die entsprechenden Steuergeräte und pyrotechnischen Aktoren aktivieren.

Neben pyrotechnischen Aktoren wurden auch schon elektromagnetische Aktoren, vor allem bei Überroll-Schutzsystemen eingesetzt. Neben den vorhandenen Steuergeräten mit pyrotechnischer Schnittstelle mussten eigens entwickelte Steuergeräte für elektromagnetische Aktoren entwickelt und eingebaut werden.

Es wurden aber auch schon Steuergeräte mit pyrotechnischer Schnittstelle für elektromagnetische Aktoren verwendet. Problematisch ist dabei, dass die an der pyrotechnischen Schnittstelle zur Verfügung stehende Energiemenge in der Regel nicht ausreicht, um elektromagnetische Aktoren zu betätigen.

Dazu schlägt die gattungsgemäße EP 1 382 495 B1 einen elektromagnetischen Aktor mit einer pyrotechnischen Schnittstelle vor, bei welchem dem elektromagnetischen Aktor, um diesen Nachteil auszugleichen, ein Energiespeicher zugeordnet ist, wobei die Spule des elektromagnetischen Aktors als Drossel eines DC-DC Wandlers dient und der Drossel der Energiespeicher zugeordnet ist.

Bei pyrotechnischen Aktoren wird jedoch durch Einspeisen einer unterkritischen Leistung aus dem Steuergerät in den pyrotechnischen Aktor Aussagen über dessen Funktionsfähigkeit gewonnen. Elektromagnetische Aktoren reagieren auf dieses Diagnoseverfahren mit abweichendem Verhalten. Eine Diagnose eines an eine pyrotechnische Schnittstelle angeschlossenen elektromagnetischen Aktors ist daher nicht ohne weiteres möglich.

Aus DE 196 48 268 A1 und DE 10 2007 034 466 A1 sind Steuergeräte bekannt, bei denen aufgrund eines Diagnosesignals des Kfz-Steuersignals ein Aktor auf seine Funktionsfähigkeit überprüft wird und das Prüfergebnis dem Kfz-Steuergerät als Diagnoseergebnissignal aufgeschaltet wird. Die Problematik einer Anpassung zwischen Steuerschaltung und diversen Aktoren werden in beiden Dokumenten nicht angesprochen.

Der Erfindung liegt die Aufgabe zugrunde, einen elektromagnetischen Aktor, d. h. einen reversiblen Aktor, an eine pyrotechnische Schnittstelle anschließen zu können, ohne diese Schnittstelle modifizieren zu müssen, wobei sichergestellt sein soll, dass das, der pyrotechnischen Schnittstelle vorgelagerte Steuergerät keinen Unterschied zwischen einem eventuell angeschlossenen pyrotechnischen Aktor oder einem elektromagnetischen Aktor feststellt, dass heißt, auch die Diagnose des elektromagnetischen Aktors muss dabei möglich sein.

Die Aufgabe wird verfahrensmäßig durch die kennzeichnenden Merkmale des Anspruches 1 und vorrichtungsmäßig durch die kennzeichnenden Merkmale des Anspruches 3 gelöst.

Dadurch ist gewährleistet, dass das KFZ- Steuergerät, egal ob an seiner pyrotechnischen Schnittstelle ein pyrotechnischer Aktor oder aber ein elektromagnetischer Aktor angeschlossen ist, grundsätzlich die von ihm erwarteten Signal-Rückmeldungen bezüglich einer Diagnose bzw. einer Auslösung erhält.

Dabei hat es sich bewährt, dass von einer Auswerte-Elektronik das Diagnose-Signal und das Schalt-Initialsignal unterschieden wird, und dass bei Vorliegen eines Diagnose-Signals eine Diagnose-Schaltung den elektromagnetischen Aktor auf seine Funktionsfähigkeit überprüft und in Abhängigkeit des Überprüfungsergebnisses das Diagnose-Ergebnissignal generiert und dass beim Vorliegen eines Schalt-Initialsignals der elektromagnetische Aktor aktiviert wird.

Dadurch ist gewährleistet, dass dem KFZ- Steuergerät nicht nur die von ihm erwarteten Antwort-Signale aufgeschaltet werden, sondern dass die von dem KFZ- Steuergerät abgegebenen Signale auch die gleiche Wirkung, d. h. entweder die Diagnose des elektromagnetischen Aktors oder aber sein Auslösen wie ein pyrotechnischer Aktor hat.

Die Aufgabe wird vorrichtungsmäßig durch eine Adaptions-Elektronik, welche die Anschlusskenndaten des elektromagnetischen Aktors an die eines pyrotechnischen Aktors adaptiert und eine Auswerte-Elektronik zum Auswerten der Diagnose und / oder Schalt-Initialsignale gelöst.

Durch die Adaptions-Elektronik kann das KFZ- Steuergerät keinen Unterschied mehr zwischen einem pyrotechnischen Aktor und einem elektromagnetischen Aktor erkennen. Die Auswerte-Elektronik garantiert, dass die Ausgangs-Signale des KFZ- Steuergeräts bestimmungsgemäß zur Diagnose des elektromagnetischen Aktors, oder aber zum Schalten des elektromagnetischen Aktors herangezogen werden.

Von Vorteil ist, dass die Adaptions-Elektronik einen Eingangswiderstand entsprechend dem Zündwiderstand eines pyrotechnischen Aktors aufweist, und dass dem Eingangswiderstand ein Schalter in Reihe und / oder ein Schalter parallel geschaltet ist.

Mit dem Eingangswiderstand entsprechend dem Zündwiderstand wird dem KFZ- Steuergerät ein intakter Aktor signalisiert. Bei offenem, in Reihe liegendem Schalter, d. h. unendlich hohem Widerstand, oder beim parallel geschalteten geschlossenen Schalter, d. h. Kurzschluss, werden entsprechende Fehlfunktionen signalisiert, die vom KFZ- Steuergerät entsprechend ausgewertet werden.

Es empfiehlt sich, dass es sich bei dem in Reihe geschalteten Schalter um einen von der Auswerte-Elektronik beeinflussbaren Öffner handelt, und dass es sich bei dem parallel geschalteten Schalter um einen von der Auswerte-Elektronik beeinflussbaren Schließer handelt.

Dadurch ist gewährleistet, dass nur dann, wenn die Auswerte-Elektronik einen Fehler im elektromagnetischen Aktor erkennt, dieser Fehler auch dem KFZ- Steuergerät durch Öffnen des in der Reihe liegenden bzw. durch Schließen des parallel liegenden Schalters signalisiert wird.

Es hat sich bewährt, dass die Auswerte-Elektronik mindestens einen Schaltkreis aufweist, der zwei unterschiedliche Spannungen zu erkennen vermag, und dass der Schaltkreis mit einer Diagnose-Schaltung und einem Verstärker zur Aktivierung des elektromagnetischen Aktors verbunden ist.

Dadurch ist gewährleistet, dass die Adaptions-Elektronik sicher zwischen den Signalen mit unterkritischer Leistung oder mit der "Fire-Leistung" unterscheiden kann, und dass diese unterschiedlichen Signale entsprechend weiter verarbeitet werden können.

Vorteilhaft ist, dass die Auswerte-Elektronik einen Messverstärker aufweist, der dem Eingangswiderstand parallel geschaltet ist, und dass der Messverstärker mit dem Schaltkreis verbunden ist.

Der Messverstärker bereitet die Signale des KFZ- Steuergeräts so auf, dass der ihm nachgeordnete Schaltkreis, der zwei unterschiedliche Spannungen zu erkennen vermag, diese Unterschiede auch mit ausreichendem Störspannungsabstand eindeutig erkennt.

Es empfiehlt sich, dass der Schaltkreis einen ersten Schmitt-Trigger zum Erkennen des Schalt-Initialsignals aufweist, und dass der erste Schmitt-Trigger mit dem Verstärker verbunden ist, und dass der Schaltkreis einen zweiten Schmitt-Trigger zum Erkennen des Diagnosesignals aufweist, und dass der zweite Schmitt-Trigger mit dem Diagnoseschaltkreis verbunden ist.

Vorzugsweise ist dabei die Diagnose-Schaltung mit dem elektromagnetischen Aktor und einer Spannungsquelle verbunden, die sowohl den elektromagnetischen Aktor als auch die Spannungsquelle auf ihre Funktionsfähigkeit überprüft.

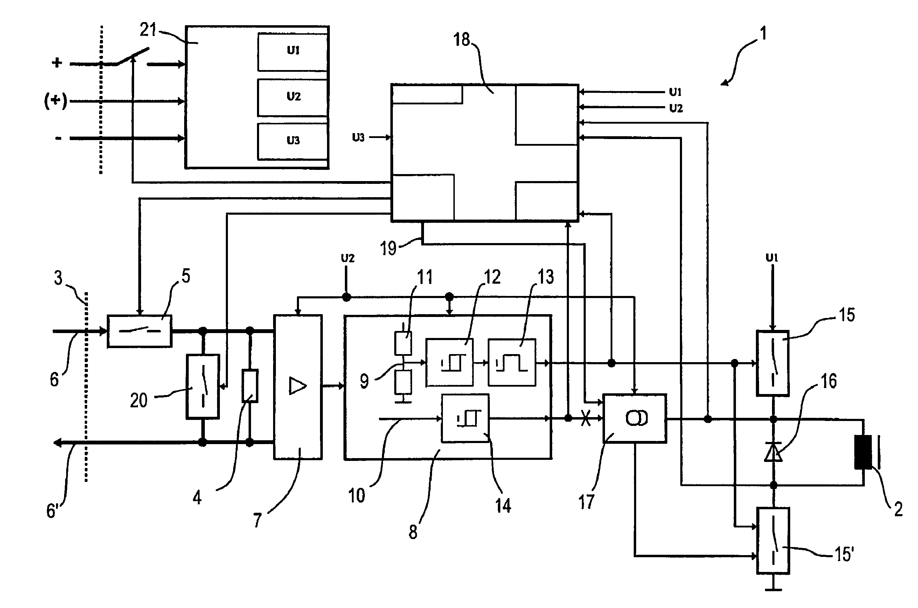

Die Erfindung wird anhand einer Zeichnung näher erläutert. Dabei zeigt die Figur das Schaltbild eines erfindungsgemäßen elektromagnetischen Aktors.

Die Figur zeigt ein Steuergerät 1 für einen elektromagnetischen Aktor 2 mit pyrotechnischer Schnittstelle 3. Am Eingang des Steuergeräts 1 ist ein Shunt 4 vorgesehen, der den gleichen Wert (üblicherweise ca. 2 Ohm) wie der Zündwiderstand eines pyrotechnischen Aktors aufweist. Der Shunt 4 ist über einen in Reihe geschalteten, als Öffner wirkenden Schalter 5 an die Anschlüsse 6, 6' der pyrotechnischen Schnittstelle 3 angeschlossen. Beim Schalter 5 kann es sich beispielsweise um einen elektronischen Schalter handeln. Alternativ oder zusätzlich kann parallel zum Shunt 4 ein, als Schließer arbeitender Schalter 20 angeordnet sein.

Das Steuergerät 1 weist einen parallel zum Shunt 4 geschalteten Messverstärker 7 auf. Der Messverstärker 7 ist mit einem Schaltkreis 8 zur Signalaufbereitung verbunden. Der Schaltkreis 8 weist einen "Fire"- Stromkreis 9 und einen Diagnose-Stromkreis 10 auf. Der "Fire"- Stromkreis 9 besteht aus einem Spannungsteiler 11, einem Schmitt-Trigger 12 sowie einem Monoflop 13, während der Diagnose-Stromkreis 10 lediglich aus einem zweiten Schmitt-Trigger 14 besteht. Der "Fire"- Stromkreis 9 ist über Leistungsschalter 15, 15', z. B. Endstufen-Transistoren mit dem Aktor 2 verbunden. Parallel zum Aktor 2 ist eine Freilaufdiode 16 vorgesehen.

Der Diagnose-Stromkreis 10 ist mit einer Stromquelle 17 verbunden, welche ihren Strom über den Aktor 2 zu einem Mikro-Controller 18 schickt. Der Mikro-Controller ist wiederum mit dem Schalter 5 und / oder mit dem Schalter 20 verbunden, über welche das Steuergerät 1 von der pyrotechnischen Schnittstelle getrennt, oder die pyrotechnische Schnittstelle kurzgeschlossen werden kann, so dass das KFZ- Steuergerät unmittelbar einen Fehler erkennt.

Die erfindungsgemäße Schaltung arbeitet bezüglich des "Fire"- Signals wie folgt. An den Anschlüssen 6, 6' der pyrotechnischen Schnittstelle 3 liegt das deutlich größere "Fire"- Signal als Stromsignal an, das auch ein deutlich größeres Spannungs-Signal am Ausgang des Messverstärkers 7 hervorruft. Im nachfolgenden "Fire"- Stromkreis wird dieser Pegel noch einmal durch den Spannungsteiler 11 entsprechend den Erfordernissen des Schmitt-Triggers 12 heruntergeteilt und auf den Schmitt-Trigger 12 gegeben, dessen Schwellwert sich von einem in dem Schaltkreis 8 erzeugten Diagnose-Signal deutlich unterscheidet. Hier können Spannungspegel-Abstände deutlich über 5 Volt vorgesehen sein. Das Ausgangs-Signal des Schmitt-Triggers 12 wird auf den Monoflop 13 gegeben, der eine Impulsverlängerung bewirkt. Diese Impulsverlängerung ist notwendig, da der an den Anschlüssen 6, 6' anstehende "Fire"-Impuls maximal 2 Millisekunden lang ist und der Aktor 2 mehr Zeit zum Schalten benötigt. Der Ausgang des Monoflops 13 steuert die Schalter 15, 15' an, die den Aktor 2 zum Schalten bringen. Der Aktor 2 wird an beiden Polen geschaltet, um die Magnetanschlüsse gegen Kurzschluss zur Masse und Versorgungsspannung zu schützen. Die Freilaufdiode 16 schützt die Elektronik vor Induktionsspannungen des Aktors 2. Die Signalführung des "Fire"-Impulses ist dabei gezielt analog aufgebaut, da eine unnötige Zeitverzögerung, die beispielsweise durch eine Digitalisierung der Signale entstehen würde, nicht toleriert werden kann.

Das Steuergerät 1 arbeitet bezüglich des Diagnosesignals wie folgt: Das über die Anschlüsse 6, 6' eingehende Diagnosesignal wird über den Messverstärker 7 verstärkt. Im Schmitt-Trigger 14, dessen Schwellwert sich vom Schmitt-Trigger 12 unterscheidet, wird das Diagnose-Signal erkannt, welches dann die Stromquelle 17 aktiviert. Der Strom der Stromquelle wird durch den Aktor 2 geschickt. Der Spannungsabfall am Aktor 2 wird vom Mikro-Controller 18 gemessen und mit einem Referenzwert verglichen. Sollten sich hier unzulässige Diskrepanzen ergeben öffnet der Mikro-Controller 18 den Schalter 5 und / oder schließt den Schalter 20, um dadurch der pyrotechnischen Schnittstelle 3 einen Fehler des Aktors 2 zu signalisieren.

Alternativ zur Erkennung des Diagnose-Signals kann auch der Mikro-Controller 18 z. B. in regelmäßigen Abständen die Stromquelle 17 über die Leitung 19 aktivieren. In diesem Falle würde der Mikro-Controller ständig die Diagnosemessung durchführen. Sollten sich hier Diskrepanzen zwischen dem Spannungsabfall am Aktor 2 und dem im Mikro-Controller 18 abgespeicherten Sollwert ergeben, würde auch hier der Schalter 5 geöffnet und / oder der Schalter 20 geschlossen, um dadurch der pyrotechnischen Schnittstelle 3 einen Fehler des Aktors 2 zu signalisieren.

Die Aufgaben des Mikro-Controllers sind zudem, dass dieser eventuell notwendige Freigabe-Signale für das Netzteil 21 kreiert. Außerdem werden die Betriebsspannungen des Netzteiles U1, U2, U3 überwacht, um daraus ebenfalls ggf. Fehlersignale bestimmen zu können. Außerdem dient der Mikro-Controller 18 dazu, die gemessenen Diagnose-Signale zu speichern, um diese ggf. später abrufen zu können.

## Patentansprüche

1. Verfahren zum Diagnostizieren und ggf. Auslösen eines elektromagnetischen Aktors (2) für Kraftfahrzeug- Sicherheitseinrichtungen, wobei der elektromagnetische Aktor (2) über eine pyrotechnische Schnittstelle (3) an ein Diagnose und / oder Schalt-Initialsignale abgebendes und zumindest Diagnosesignale aufnehmendes Kfz-Steuergerät angeschlossen ist,
**dadurch gekennzeichnet, dass** aufgrund eines Diagnosesignals des Kfz-Steuergerätes der elektromagnetische Aktor (2) auf seine Funktionsfähigkeit überprüft wird und das Prüfergebnis dem Kfz-Steuergerät als Diagnoseergebnissignal aufgeschaltet wird, wobei das Prüfergebnis in seiner Art dem eines pyrotechnischen Aktors entspricht, und dass aufgrund eines Schalt- Initialsignales der elektromagnetische Aktor (2) ausgelöst wird.

2. Verfahren nach Anspruch 1**,dadurch gekennzeichnet, dass** von einer Auswerte-Elektronik das Diagnosesignal und das Schalt-Initialsignal unterschieden werden und dass bei Vorliegen eines Diagnosesignals eine Diagnoseschaltung den elektromagnetischen Aktor (2) auf seine Funktionsfähigkeit überprüft und in Abhängigkeit des Überprüfungsergebnisses das Diagnoseergebnissignal generiert und dass bei Vorliegen eines Schalt- Initialsignales der elektromagnetische Aktor (2) aktiviert wird.

3. Elektromagnetischer Aktor (2) zum Auslösen von Kfz-Sicherheitseinrichtungen mit einem Steuergerät (1), welches über eine pyrotechnische Schnittstelle (3) an ein Diagnose und / oder Schalt-Initialsignale abgebendes und zumindest Diagnoseergebnissignale aufnehmendes Kfz-Steuergerät angeschlossen ist,
**gekennzeichnet durch** eine Adaptionselektronik, welche die Anschlusskenndaten des elektromagnetischen Aktors (2) an die eines pyrotechnischen Aktors adaptiert und eine Auswerte-Elektronik zum Auswerten der Diagnose und / oder Schalt-Initialsignale.

4. Elektromagnetischer Aktor nach Anspruch 3, **dadurch gekennzeichnet, dass** die Adaptionselektronik einen Eingangswiderstand (4) entsprechend dem Zündwiderstand eines pyrotechnischen Aktors aufweist und dass dem Eingangswiderstand (4) ein Schalter (5) in Reihe und / oder ein Schalter (20) parallel geschaltet ist.

5. Elektromagnetischer Aktor nach Anspruch 4, **dadurch gekennzeichnet, dass** es sich bei dem in Reihe geschalteten Schalter (5) um einen von der Auswerte-Elektronik beeinflussbaren Öffner handelt und dass es sich bei dem parallel geschalteten Schalter (20) um einen von der Auswerte-Elektronik beeinflussbaren Schließer handelt.

6. Elektromagnetischer Aktor nach einem der Ansprüche 3 bis 5, **dadurch gekennzeichnet, dass** die Auswerte-Elektronik mindestens einen Schaltkreis (8) aufweist, der zwei unterschiedliche Spannungen zu erkennen vermag, und dass der Schaltkreis (8) mit einer Diagnose-Schaltung und einem Verstärker zur Aktivierung des elektromagnetischen Aktors (2) verbunden ist.

7. Elektromagnetischer Aktor nach Anspruch 6, **dadurch gekennzeichnet, dass** die Auswerte-Elektronik einen Messverstärker (7) aufweist, der dem Eingangswiderstand (4) parallel geschaltet ist und dass der Messverstärker (7) mit dem Schaltkreis (8) verbunden ist.

8. Elektromagnetischer Aktor nach Anspruch 7, **dadurch gekennzeichnet, dass** der Schaltkreis (8) einen ersten Schmitt-Trigger (12) zum Erkennen des Schalt-Initialsignals aufweist und dass der Schmitt-Trigger (12) mit dem Verstärker verbunden ist und dass der Schaltkreis (8) einen zweiten Schmitt-Trigger (14) zum Erkennen des Diagnosesignals aufweist und dass der zweite Schmitt-Trigger (14) mit dem Diagnoseschaltkreis verbunden ist.

9. Elektromagnetischer Aktor nach einem der Ansprüche 6 bis 8, **dadurch gekennzeichnet, dass** die Diagnoseschaltung mit dem elektromagnetischen Aktor (2) und einer Spannungsquelle (21) verbunden ist und sowohl den elektromagnetischen Aktor (2) als auch die Spannungsquelle (21) auf ihre Funktionsfähigkeit überprüft.
